# EUROPEAN PATENT SPECIFICATION

(11) **EP 1 507 738 B1**
(45) Date of publication and mention of the grant of the patent: **29.03.2006**
(21) Application number: 03720538.2
(22) Date of filing: 25.04.2003
(51) Int. Cl.: B67C 3/20, G01F 1/66, G01F 3/00, G01F 25/00, G01F 13/00

(54) **DOSING SYSTEM**
DOSIERSYSTEM
SYSTEME DE DOSAGE

(30) Priority: 17.05.2002 GB 0211422
(43) Date of publication of application: 23.02.2005
(73) Proprietor: UNILEVER PLC, London EC4P 4BQ (GB); UNILEVER N.V., 3013 AL Rotterdam (NL)
(72) Inventor: TODD, Jeffrey, Leeds, Yorkshire LS16 9AG (GB)
(74) Representative: Pearce, Timothy
(86) International application number: PCT/EP2003/004410
(87) International publication number: WO 2003/097516

(56) References cited:
- DE-A- 19 701 001
- GB-A- 2 081 438

## Description

The present invention relates to a dosing system and in particular to a system for dosing a liquid into a container.

### Background and Prior Art

The present invention is especially applicable to manufacturers of product that comprises a volume of a fluid composition dosed into a hand-holdable container. Without being prescriptive, the total volume of composition in such containers is typically between 5 and 1000 mls, though containers or either a larger or smaller volume may be contemplated, depending upon prevailing circumstances. The fluid compositions in such products normally contain one or more liquid components such as additives intended to impart a desirable characteristic to the composition. Many of these components or additives are each commonly present as a relatively small proportion of the overall composition, but for many reasons, it is desirable that it is dosed accurately into the composition. Some of the reasons, are directly related to the nature of the component or additive, such as variation in product quality; for example if the additive is a fragrance, or a component of a fragrance, an incorrect dosage would alter the perceived smell of the product. Other reasons can have widespread applicability; for example many additives are relatively expensive, so that the total cost of the product can be increased inadvertently by even a small increase in the amount of additive added. The present invention is most desirably applicable in respect of dosing a component or only a small fraction of the composition into the container.

In one convenient method for manufacturers to fill containers or introduce one or more components into them, the container is conveyed to a filling station, is held there for long enough for filling and is thereafter removed to undergo a subsequent operation, such as capping or sealing the container. The maximum speed of a filling line is governed by the speed of the slowest operation which can have consequences as indicated below.

Apparatus has been described previously for conveying a fluid composition or component thereof into a container or onto the contents of a receptable through a nozzle in a dispensing head under pressure.

One method for making a product containing a fluid composition has been to prepare a large batch of the composition containing all its constituents in a vat and then withdraw a metered dose of that composition from the vat into the chosen container. This is a system that enjoyed widespread applicability because it is relatively simple to operate. It is relatively easy to mix large volumes of fluids to attain reasonable homogeneity and dose accuracy. Such a scale means that even comparatively small proportions of a constituent can be added quite accurately. For example, on a 10 tonne scale, 0.1% by weight constitutes 10 kg, which can be weighed quickly to an accuracy of better than 1%.

However, a batch manufacturing system is relatively inflexible to operate and includes a number of disadvantages that are becoming more applicable as consumers' habits and manufacturers' operational requirements change. There has been an increasing trend towards greater diversity in any single product, such as variations in the number of differently fragranced products offered to consumers to meet their individual preferences. Secondly, there is a trend for manufacturers to concentrate production at a smaller number of manufacturing sites. Both of these trends mean that there is a reduced likelihood that consecutive batches made in the same vat will have the same composition. When the composition of successive batches is different, it is necessary to clean out the vat and supply line to the station in order to avoid cross contamination between the two compositions. This can result in a significant down time between the production of the batches, and secondly there is a loss of the first composition which adhered to the vat wall and in the supply line. Both of these factors increase the average effective production cost of the manufacturer.

Accordingly, the instant inventor has been investigating how to reduce or circumvent the problems outlined above in batch manufacture. In one replacement method, the inventor contemplated introducing a liquid component of the composition directly into the eventual container. This, however, poses a different set of problems or difficulties. First, since the volume of composition to be introduced into a container is relatively small compared with the size of the batch, it is a significantly greater problem to dose an accurate weight of an individual component and especially an additive into the container compared with the entire batch. Secondly, dosing directly into the container can most easily be contemplated via a station on the line. The speed of the line dictates the length of the window whilst the container is under the station during which addition of the component can be carried out. Commonly, this is a relatively short period of time, often measured in fractions of a second. Though the window could be widened by moving the station at broadly the same speed as the line to keep both in register for longer, that in itself complicates the machinery, rendering it more expensive and introducing an extra risk of mechanical breakdown.

In DE 19701001 A there is disclosed a process and an apparatus according to the preamble of claims 1 and 8.

In GB 1492451 there is described a simple method for measuring the approximate volume of particulate material, such as run of mill coal, that falls off the end of a conveyer belt, in which a light source illuminating the falling coal casts a shadow profile against a translucent screen which is sensed, by a television camera or a photo-diode array. This disclosure provides at most background teaching in relation the problem that the instant invention is addressing.

Furthermore, in GB 2081438 A there is described a non-contact volumetric monitoring device comprising a first sensing means for measuring the speed of a flow of material, and a second sensing means for measuring the width of the flow.

It is an object of the present invention to identify a process and apparatus that can overcome or ameliorate one or more of the problems identified hereinbefore to improve in-container dosing of a liquid component into a container.

It is a further object of certain preferred embodiments of the present invention to improve the dosing of a small volume of liquid into a dispensing container on a high speed filling line.

### Summary and Brief Description of the Present Invention

In accordance with one aspect of the present invention, there is provided a process for introducing a dose of a liquid component into a container having an open mouth comprising the steps of:-
conveying the container to a dosing station,
retaining the container within the dosing station whilst the dose is introduced into the container and thereafter conveying the container away from the dosing station
   which station comprises
   a retaining means for the container,
   a dosing head that is positioned above the retaining means and houses a dosing nozzle oriented downwardly towards the mouth of container,
   an inlet line for the liquid component terminating in the nozzle, and
   a fluid flow control valve mounted within the inlet line that is capable of being opened for a predetermined period of time;
opening the valve when the container is retained within the dosing station and expelling the dose of the liquid component through the nozzle in a stream; characterized by scanning a laser-generated beam of light across the stream at frequent intervals;
calculating the width of the stream at each scan and therefrom generating a representative value of the volume of liquid component between successive scans and cumulating successive representative values to generate a cumulative value for the dose;
comparing the cumulative value with a predetermined range of dose values and if the cumulative value lies above or below the range of dose values, generating a signal to actuate means for respectively decreasing or increasing the dose introduced into a subsequent container.

In accordance with a second aspect of the present invention there is provided an apparatus for introducing a determined dose of a liquid component into a container having an open mouth comprising:-
conveyor means for conveying the container to a dosing station and conveyor means for conveying the container away from the dosing station after the dose has been introduced into the container.
   the dosing station comprising:
   retaining means for retaining the container in the dosing station,
   a dosing head positioned above the retaining means and housing a dosing nozzle oriented downwardly towards the mouth of container,
   an inlet line for the liquid component which is connectable at one end to a storage vessel for the liquid component and terminating at a second end in the dose nozzle, and
   a fluid flow control valve mounted within the inlet line,
a control means for opening and closing the fluid flow control valve when the container is located on the dosing station,
a means to expel the dose of liquid through the dosing nozzle in the form of a stream, characterized by
a laser generator positioned at a height intermediate between the height of the retaining means and the height of the nozzle and oriented to scan a narrow beam of light at regular frequent intervals across the stream of liquid component to a detector, thereby measuring the width of the stream at each interval,
a controller adapted to receive an input from the detector which controller first calculates the width of the stream at each scan and thereby generates a representative value of the volume of liquid component in the stream in the interval between one scan and the next, secondly calculates a cumulative value of the total volume of the stream in the dose, thirdly compares the cumulative value with a predetermined range of dose values and if the cumulative value lies above or below the predetermined range, generates a signal to actuate means for respectively decreasing or increasing the dose value introduced into a subsequent container.

In practice, the flow control valve operates under the control of a timing device that opens the valve for a set period of time.

When the flow control valve is open, a stream of liquid component is expelled towards the container. In essence, the scanning laser device scans the stream very frequently and at a constant interval between each scan. The detector detects where the narrow beam of light generated by the laser generator intercepts the stream of liquid component and where it passes from emitter to detector without encountering the stream, so that the width of the stream can be calculated at each scan. From the width of the scan, the cross sectional area of the stream can readily be calculated in conjunction with the known transverse cross section of the outlet of dosing nozzle. In general, the stream can be assumed to retain the transverse cross section shape of the nozzle outlet, commonly a circle, so that the volume can be calculated from the formula (πld²/4 where d is the width of the stream and 1 is the distance travelled by the stream between successive scans), thereby generating a value that is representative of the volume of the stream between successive scans. By cumulating the values of successive scans, the cumulative representative value can be generated for the volume of the stream in each dose.

The cumulative value for each dose is then compared with a predetermined range of dose values and when it is either higher or lower than that range, the device is programmed to generate a signal to a means for adjusting the size of the dose. This dose adjustment means can comprise either altering the period of time for which the flow control valve is kept open, or a means for altering the pressure exerted on the liquid component to expel it through the open flow control valve. Before the scanning laser encounters the next dose, the cumulative value for the stream is reset to zero.

The range of dose values can be varied by the operator to enable a different pre-determined amount of the same liquid or a different liquid to be introduced into each container.

In practice, during a production run, there is sometimes a tendency for the volume of a dose that is dispensed falling from the beginning of the run towards the end of the run, depending at least in part on the means chosen to apply pressure to the liquid that is being dosed. Accordingly, in such circumstances, it is more common to increase the dose volume periodically when the volume falls below its specified lower limit for an acceptable dose rather than decrease the dose volume should it exceed its specified upper limit. In many instances, the dose volume change is a step change, desirably intended to bring the dose volume into the predetermined dose volume range, for example to a point at or close to the central point of that range, that is to say the volume step change being approximately half the size of the range, such as from 40 to 60% of the range. However, in some instances, the minimum step change is dictated by the equipment which in turn may mean that the step is somewhat larger that that indicated above, especially in the context of dosing relatively small volumes. Also where the minimum step is less than about half the volume range, the user has the option to adjust the step change so as not to attain the central point in that range, but instead some point that is closer to the limit which previously the dosing fell outside.

It will also be recognised that it is possible for the user to establish two ranges, if it is so desired, the one being an outer range and the other an inner range nested within. The existence of an inner range enables the user to maintain a dose volume that is relatively close to the centre of the range as indicated above and the outer range limits can act as or generate a warning signal to the user that a problem has arisen.

The restoration of the dose volume to within the desired range can be carried out in a variety of different ways, including increasing the mass of gas present in a supply vessel containing the liquid component or by altering the time that the flow control valve is open during each dosing cycle.

Whilst this invention is particularly suitable for introducing a small amount of a liquid into a container, for example a dispensing container for a personal care product, with the intention of completing the composition within the container, it will be recognised that the same technique can be employed for introducing a metered volume of a liquid component that constitutes even a major fraction of the eventual final composition. Although the invention is especially suitable for introducing a component of a composition that is intended for distribution and sale in the container into which it has been introduced, it will be recognised that the invention is also suitable for employment during analytical procedures which desire to introduce accurately measured volumes of an analytical reagent and/or a sample into a chamber in which analysis can subsequently be carried out.

### Detailed Description of the Invention and Preferred Embodiments Thereof

The present invention relates to apparatus and a process for accurately dosing a volume of liquid, and particularly a small volume of liquid into a container for eventual sale or further processing. The container is often intended to be held in the hand. In particular, the container usually has a relatively narrow mouth, described in more detail below, through which it is filled. As essential constituent comprises a laser device which generates a narrow beam of light that the stream at a high and even frequency, so that a representative value for the volume of liquid in the stream can be calculated after each scan, and by comparing the cumulative value with a range of dose values defined by a preset upper and lower value, the variation in the amount of that liquid which is dosed into a run of containers can be kept within or very close to a tolerable difference from a target figure. The technique is capable of operating at relative high speeds of presentation of containers to a dosing head.

The present invention will be described herein with reference in particular to the manufacture of a composition for eventual sale. The invention is suitable for the introduction of additives into a container for mixing with a bulk formulation (in some circumstances alternatively called a master-batch) containing the remaining components of the composition. In that way, it is possible to make and/or store batches consisting of the greater fraction of any particular composition which may be the same from one batch to the next, avoiding the loss of product and down-time required to clean the manufacture or storage vat between batches. Variants are easily obtained by introducing different additives withdrawn from individual storage vessels, which may even be the containers in which the additive is distributed to the composition manufacturer. It is even possible to contemplate continuous or semi-continuous manufacturing processes for the bulk formulation, on account of the improved capability to vary the addition of different additives that the instant invention offers.

The range of additive or other liquid components for which the instant invention is applicable is any liquid that can be pumped. The additive can itself be liquid under the prevailing conditions or have been rendered liquid by dissolution or dispersion in a suitable solvent or carrier fluid. Commonly, the component may be liquid or liquified at ambient temperature, though the invention is applicable if desired to materials which have become liquid at an elevated temperature, e.g. up to 100°C. The choice of the liquid component will vary depending on the nature or intended use of the composition. Such liquid components can be selected from a non-exhaustive list comprising:-
liquid abrasives; acidifying agents; analgesic; anti-acne agents; caking or anti-caking agents; anticaries agents; antidandruff agents; antifoaming or foaming agents; antifungal agents or fungicides; antimicrobial agents or microbicides; antioxidants; antiperspirants; antistatic agents; basifying agents; buffering agents; liquid bulking agents or diluents; chelants; colorants or dyes; corrosion inhibitors; cosmetic additives; denaturants; deodorants; depilating; or epilating agents; drugs; emulsifiers; emulsion stabilisers; externally applied analgesics; film formers; flavourings; fragrances; colorants, conditioning agents, fixatives, waving or straightening agents or bleaches for hair; hair growth promotion agents; humectants or moisturising agents; lytic agents; nail conditioning agents; neutralising agents; opacifying agent; oral care agents; oral health care drugs; oxidising agents; pH adjusting agents; pharmaceutically active ingredient; plasticisers; preservatives; prophylactics; reducing agents; skin bleaches; skin conditioners; skin protectants; slip modifiers; solvents or carrier fluids; sunscreen agents; surface modifiers; surfactants or solubilising agents, including hydrotropes; stabilisers; suspending agents; therapeutic drugs; ultra violet light absorbers; viscosity controlling or modifying agents. Where the invention is employed in conjunction with analysis, the liquid component can comprise either the sample itself or a reagent or diluent which needs to be introduced in a fixed volume ratio to the sample.

Without being prescriptive, the invention is suitable for employing during the course of manufacture of personal care products, including both cosmetic and pharmaceutical products, such as deodorant or antiperspirant products, body sprays, oral care products, hair care products, medicaments, skin care products, including moisturisers, anti-ageing and sunscreen products, therapeutic products including analgaesics that are applied topically, and therapeutic agents that are sprayed into the buccal cavity. The instant invention can also be employed for the introduction of a liquid component into fluid domestic or industrial products, such as pesticides, cleansing agents, detergent formulations inter alia for fabric washing, or hard surface cleansing or disinfection and indeed to any fluid product containing a fragrance, preservative or minor amount of an additive from the list given hereinabove. The eventual form of the composition in the product is normally fluid, that is to say flows under the prevailing conditions.

It may be a simple liquid or may be in admixture with a propellant such as liquidised gaseous hydrocarbons or compressed air, nitrogen or inert gas.

The container into which the additive or other liquid component can be introduced in accordance with the present invention can have flexible or inflexible walls and can comprise a bottle, jar, can or canister, dispenser, phial, ampoule, pouch, sachet, sample chamber or other receptacle for a liquid, provided that it has an open mouth dimensioned to permit passage therethrough of the stream of the liquid component.

The present invention is well suited to dosing a component or a small fraction of total composition into a small container, commonly a dispensing container and particularly a container with a small mouth, on a high speed filling line.

In operating the instant invention, the liquid component is preferably withdrawn from its supply vessel under constant pressure during each dose of the component into its container, such as a pressure selected in the range of from about 2x10⁵ to 3.5x10⁵ Pa. Constant pressure during each dose enables the liquid to flow through the nozzle at a substantially constant velocity, thereby enabling the width measurement of the stream of liquid at a scan to be representative of the volume of liquid that has flowed between successive scans. Preferably, the pressure is kept constant to within about 3 mbar. It will be recognised that where the component is expelled by externally applied gas pressure to the supply vessel, the pressure in the tank may fall as the residual volume of liquid in the tank falls. If dosing an entire production run were allowed to happen without any corrective action being carried out, this is likely to result in a reduction in velocity of the liquid stream and hence a progressive reduction in the amount of the component that is introduced in the dose. This effect can be countered automatically by operation of the instant generation of a compensating step change in the dose volume when it falls outside the range limit as described herein. As an alternative means to implement the process described above, or by way of a cross-check, the user may determine the residual volume of liquid in the supply vessel (for example by subtracting each measured dose from an initial volume in the vessel) and as the volume decreases, increase the volume of gas supplied to the vessel to restore its pressure to that applied originally, employing an algorithm that can be based on an empirical trial employing the same liquid component from an identical supply vessel or approximately based on previous experience with different liquids and identical or even different supply vessels, taking into account factors such as the difference in viscosity and density of the liquids and the expected profile of pressure variation within a tank as the volume of liquid falls.

Instead of employing the aforementioned correction mechanism to alter the supply of gas to within the storage vessel so as to maintain the applied gas pressure within desirable limits, the correction mechanism can be linked to correspondingly alter the time which the valve is kept open.

The period of time when the container can be located at its dosing station is dictated to a great extent by the speed at which the line is being operated. It is often of practical and commercial benefit to be able to operate a line at as fast a rate as possible, because it reduces the capital cost per unit and hence overall processing cost per unit. However, as the speed of the line increases, then the window for dosing any particular component into each container proportionately decreases. Although the dosing station period is, in general, at the discretion of the manufacturer, in operations according to the instant invention, the dosing period is often dictated by the speed of the line and the spacing of containers along the line. That is because the dosing station in the instant invention in preferred embodiments comprises a means to retain the container within the dosing station whilst the line, commonly in the form of a conveyor belt, continues to slide underneath. It will be recognised that the retention time at the dosing station varies in part upon the actual lateral speed of the conveyor belt and the capability of the retaining means to slow down, halt and then release the container as it is conveyed by the belt. The spacing of the containers along the belt relative to the speed of the belt sets out the practical operating window. The dosing station period is often not longer than 5 seconds, and the invention is particularly well suited to very short dosing station periods, such as periods of up to 1 second, often up to 500 milliseconds, thereby enabling the line to be operated at a rapid rate.

The minimum period at the dosing station is in practice often chosen to a considerable extent to make allowance for three activities, namely an initial period for sensing the presence of the container at the dosing station retaining means, the time during which the component is dosed into the container and preferably a post-dosing safety period to allow for any residual drips to drip from the nozzle into the container. Commonly it takes at least 15 milliseconds to sense the presence of the container and a practical dosing time is often at least 5 milliseconds. The post-dosing period is desirably at least 5 milliseconds. A convenient minimum period is sometimes 25 milliseconds. In many instances, the preferred period employed in the instant invention process is between 50 and 300 milliseconds. It will, however, be recognised that such a preferred period is employable when it is desired to dose a small volume of the liquid component into each container, such as from 0.1 to 2 mls of liquid per container. Dosing station periods of up to 1 second can readily accommodate liquid dosing of approaching 10 mls per container. As the volume of liquid dosed into each container is larger, so the proportion of the dosing station period devoted to sensing and post dosing diminishes.

The mechanism for retaining the container at the dosing station conveniently can comprise a pair of eccentrically mounted rotating vertical rollers mounted across the conveyor on the downstream side of the dosing station. The two rollers each rotate in synchrony about its vertical axis, and the axes are spaced apart such that sequentially during each rotation, the faces of the rollers are closer than the diameter of the container such that the container is held against the rollers by friction between its base and the conveyor, continued rotation of the rollers maintains the spacing between the rollers less than the container diameter until near the end of the rotation, the spacing widens to greater than the container diameter, permitting it to pass through. Further rotation of the rollers bring them back to the starting position for a subsequent container. It will be recognised that there is one revolution of the roller per container, so that for example, if the line speed of the conveyor is 5 containers per second, then the roller rotates likewise at 5 revolutions per second. Although this is described for twin rollers, a similar effect can be achieved with a single, eccentrically mounted vertically rotating roller acting together with an opposed stationary wall or by a transversely reciprocating cam and opposed stationary wall or pair or reciprocating cams.

An alternative container retaining means can comprise a rotating scroll that is mounted in the longitudinal direction above the conveyor and its surface at a height at which it can come into contact with the container, preferably in the vicinity of its centre of gravity, so as to minimise any risk of the container being toppled over. The scroll comprises a rod into which is formed a helical thread that is dimensioned to receive the container. For a circular container, the thread profile is preferably semicircular, and for other cross-section shapes, a corresponding profile can be provided or alternatively for regular polygonal shapes, a semicircular thread profile can be suitable too. The container is conveyed into the open (upstream) end of the thread by the conveyor, optionally with the assistance of a baffle. The scroll is rotated to drive the helical thread to counter the movement of the conveyor. Advantageously, the pitch of the thread is varied along its length. Initially, it preferably has a comparatively large pitch, which is decreased to decelerate the container until when the container is in register with the dosing nozzle, the pitch is small, thereby causing the container to dwell at that point at the dosing station, and thereafter the pitch of the thread is increased to enable the container to accelerate until the container reaches the remote (downstream) end of the helical thread, preferably at the speed of the conveyor. Advantageously, the scroll provides one revolution of the scroll in the central dwell section within minimum pitch. The container thereafter is able to exit from the scroll and be conveyed away from the dosing station by the conveyor. It will be recognised that the scroll can accommodate three containers at any one time, one decelerating, one in the dwell position in register with the dosing nozzle and one accelerating away from the dosing station.

The valve in the liquid component supply line preferably has a rapid response time, most advantageously in the region of 10 to 30 milliseconds so as to assist in enabling a relatively short dosing station period for the container to be employed.

The supply line within the dosing head may permit unobstructed flow of the component there-through, or if desired may include a mesh or like means which can act as a filter for foreign particles. The nozzle desirable has an aperture of substantially circular transverse cross section so as to generate a cylindrical stream which may, at least initially and/or terminally taper. The diameter of the aperture in the nozzle is variable at the discretion of the manufacturer, who will normally take into account the volume of liquid component that is to be dosed, and especially the dimensions of the mouth of the container. In practice, the diameter of the nozzle is less than the diameter of the mouth of the container and preferably less than 1/2 the diameter of the mouth and in many instances between 1/20^{th} and 1/5^{th}. The mouth dimensions naturally vary in accordance with the shape of the container. In most instances, the mouth will have a diameter of from 5 to 100 mm and in many instances the mouth diameter is at least 10 mm and often in the range of from 15 to 35 mm. In conjunction with such mouth diameters, the nozzle aperture diameter is commonly selected in the range of from 1 to 12 mm and particularly from 1 to 8 mm. It will be recognised from the foregoing that the instant invention is especially suitable for dosing a fragrance or other minor ingredient in liquid form into an aerosol canister or a roll-on dispenser, for example as a component of cosmetic compositions. The nozzle can be made from a material that is resistant to corrosion or adverse reaction with the liquid component being dosed, at the discretion of the skilled user. The nozzle is often made from a thermoplastic such as polyethylene, polypropylene, or PTFE or a resistant metal such as a stainless steel, e.g. 316 grade, which are very suitable for dispensing many components intended for cosmetic formulations such as stabilisers, humectants, preservatives or fragrances.

Although it is possible for the stream to be directed perpendicularly through the container mouth onto its base, it is preferable for the stream to be inclined at an acute angle to thereto, such as an angle selected between 1 and 15 degrees, preferably so as to be able to direct the stream onto the side of the container, thereby reducing the risk of droplets of the liquid component bouncing up and directly out of the container.

Preferably, the dosing nozzle tip in the dispensing head is positioned at a height of from 12 to 50 mm above the mouth of the container, and particularly between 15 and 25 mm. Such a spacing provides a sufficient spacing to allow for intermediate scanning by the laser without introducing greater risks or uncertainties arising from a larger spacing.

The scanning laser is an essential constituent of the instant invention. It is preferable a flat beam scanning laser, the vertical thickness of the beam being more preferably not greater than 1mm. Typically, the laser scans very rapidly, such as at least 1000 times per second, and more preferably at least 3000 times per second. Excellent results have been obtained using apparatus which scans in the range of 5000 to 10000 times per second, though the user may employ any laser apparatus that scans more rapidly, e.g. up to the fastest available, which may be around 15000 tps in 2001, if he so chooses.

The controller employed herein can comprise a computer having a capability to receive an input from the detector of the scanning laser, which is programmed to calculate from the width of the stream at each scan, the cross-sectional area of the stream, and from time between scans and the rate of flow of the component, the value of the dose between successive scans and the cumulative value of the stream dose after the dose has been dispensed. Such a computer is capable of storing upper and lower limiting values defining a range of acceptable dose levels, that can be input by an operator and optionally corrected for different dosing operations in the manner described hereinbefore. The computer compares the range limiting values with the cumulative value that it has calculated, and when the former value is reached (or in practice just exceeded where the values do not coincide exactly), it generates a signal to the means for altering the flow rate for a subsequent dose. As indicated herein, the means can comprise a flow control valve having an open period that can be varied or a means generating pressure in a supply vessel of the component. The signal from the controller can operate to cause the receiver to make an adjustment automatically, or it is conceivable for the signal to operate an audible, visual or other sensory cue to alert a process operator to effect such an adjustment manually.

The invention is described herein with regard to the dosing of a single stream of a liquid component into the container, but it will be understood that it can be repeated to introduce a further stream, which may be carried simultaneously with or subsequent to the first stream. The number of simultaneous streams is preferably chosen in conjunction with the diameter of each relative to the diameter of the mouth so as to avoid them colliding with each other or spilling outside the mouth.

The stream of liquid component may be introduced into an empty container or one which already contains one or more of the remaining components of the composition, for example introduced at an earlier filling station upstream in the filling line.

The container can be desirably brought into register with the nozzle on a conveyor belt, by the container retaining means, preferably adapted to decelerate the movement of the can, bring it to a halt for a predetermined length of time, maintain it stationary for the dosing period referred to hereinabove, and thereafter accelerate the can out of register. This can be achieved relatively conveniently by the mechanism described hereinbefore which enables the conveyor to first bring the container into register with the retaining mechanism, hold it against the mechanism during the dosing and thereafter convey it away from the dosing station when the gap between the restraining cams or cam plus stationary wall is opened wide enough or the downstream end of the scroll thread has been reached.

Once the chosen component or compositor has been dosed into the container, the latter is conveyed away from the dosing station for subsequent operations, which may include the introduction of one or more further components. A further subsequent operation which can be employed when the container itself comprises a dispenser of a compositor, such as one of the types of compositions named hereinbefore, is that of closing or sealing of the mouth of the container, for example by applying a closure over or inserting it into the mouth or squeezing the mouth side-walls together and heat sealing or gluing them. The closure may be removeable to permit the user to extract the contents of the container or can act as a dispensing element. Such an element can comprise a valve and actuator for an aerosol, a pump mechanism for a pump dispenser, e.g. a pump spray, a roller (often a roll ball) and a housing therefor for a roll on dispenser, a perforated or apertured plug for topical application of a liquid or cream/soft solid. If desired, such dispensing element may itself be covered by a protective cover or other form of packaging in a yet further subsequent operation.

Where the container is being employed in analysis, such as in high speed automatic analytical equipment, a subsequent and/or prior operation can comprise the introduction of a further reagent and the sample to be analysed, and a later operation comprises a detection stage in which a detectable property or change in the property of the sample is measured or observed and recorded.

The process and apparatus herein has been described particularly with regard to the dosing of a liquid into a container, but it will be recognised that the liquid is representative of a non-gaseous flowable substance, i.e. a material which flows when subjected to modest pressure, typically less than about 1 bar, including flowable liquids having an increased viscosity, flowable gels and powders.

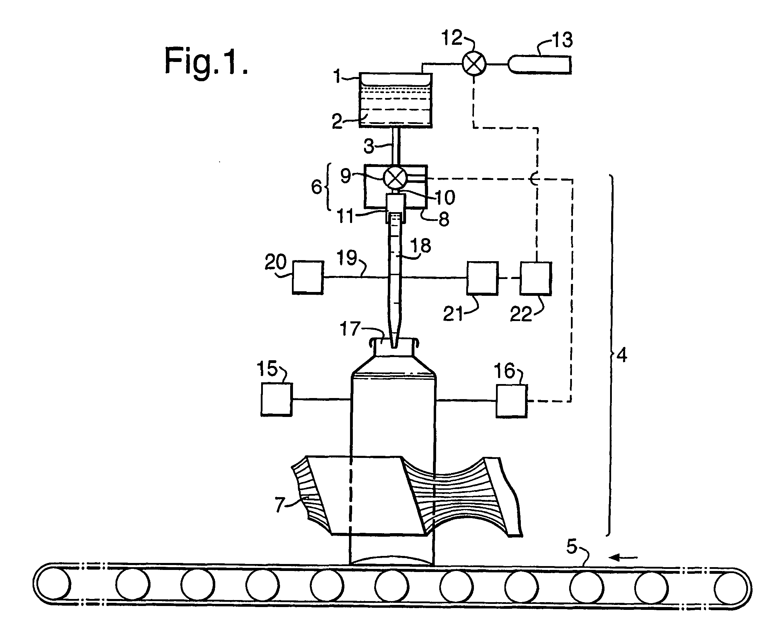

Having described the invention in general terms, a specific embodiment thereof is described hereinafter in more detail by way of example only with reference to the accompanying drawings in which:-
Figure 1 represents a schematic diagram of the apparatus

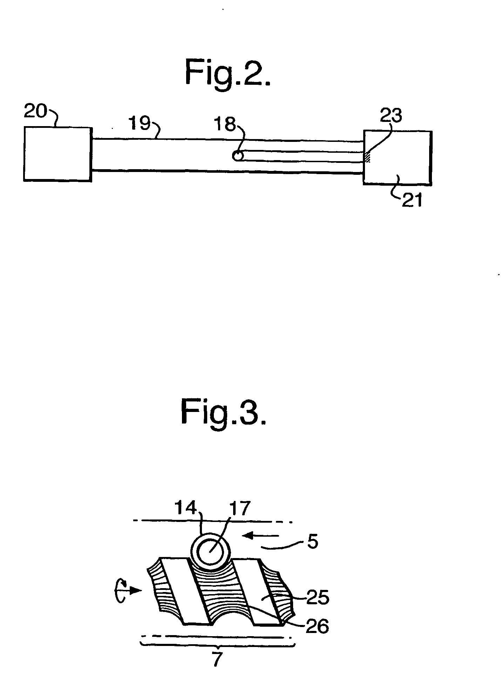

Figure 2 represents a schematic diagram of the scanning laser
Figure 3 represents a schematic plan view of the retaining means and container.

The apparatus comprises a supply vessel [1] for a fragrance composition [2] which is linked by a supply line [3] to a dosing station [4] which is positioned above a conveyor belt [5]. The dosing station [4] comprises a dosing head [6] mounted above can retaining means [7]. The dosing head [6] comprises a housing [8], through which line [3] passes via a flow control valve [9] and a fine mesh [10] to a dosing nozzle [11] having an internal diameter of 1.2 mm. The composition [2] in the supply vessel [1] is pressurised by gas acting through gas valve [12], from gas tank [13], the pressure in the vessel [1] being maintained at approximately 2.5 x 10⁵ Pa +/- 3 mBar. Beneath nozzle [11] at an acute angle to its axis is an aerosol can [14] retained in place during the dosing operation by a rotating scroll [7] that is positioned above the conveyor belt [5] along its longitudinal axis. The scroll [7] comprises a rod [25] in which has been formed a helical thread [26] dimensioned to receive the can [14], having a pitch that varies along its length. The pitch becomes progressively smaller to decelerate the can, is at a minimum for just less than one revolution to cause the can to dwell in register with the nozzle [11] and thereafter increases to accelerate the can up to the conveyor speed. The scroll [7] is rotated by a motor means (not illustrated) counter to the direction of movement of the conveyor belt [5].

A fibre-optic-based light emitter [15] acting as a sensor for the can [14] is positioned beside the can and its detector [16] is linked electronically to a valve-opening mechanism (not shown separately) of the control valve [9], a signal being generated by the sensor and transmitted to permit the opening of the control valve [9] when can [14] is sensed to be below the nozzle [11]. The can [14] is a standardly available can that is cylindrical with a frustonical upper section having a height of about 110 mm, a diameter of about 53 mm and a mouth [17] of diameter 25 mm. The mouth [17] of the can [14] is approximately 20 mm below the tip of dosing nozzle [11]. When the control valve [9] is opened, a stream [18] of liquid fragrance is expelled by gas pressure through nozzle [11] at an angle of about 5° to the vertical towards the mouth [17] of the can [14]. The stream [18] is intercepted by a parallel beam of light [19] which is generated by a generator [20] of a scanning laser model L12 from Keyance, and detected by its detector [21] which generates and transmits a signal to computer [22] proportionate to the width of the shadow [23] cast where the beam [19] is intercepted by stream 18. The computer [22] is linked electronically to a valve opening mechanism (not illustrated separately) of the gas valve [12]. The stream [18] is oriented through mouth [17] of can [14]. The conveyor belt [5] brings the can [14] into proximity with the helical thread [26] of rotating scroll [7], and the rotation of the scroll [7] causes the can [14] to dwell at the dosing station in register with the dosing nozzle [11] for about 168 ms until it exits from the remote downstream end of the helical thread [26]. Thereafter, the can [14] is conveyed away from the dosing station on conveyor [5].

## Claims

1. A process for introducing a dose of a liquid component into a container having an open mouth comprising the steps of:-
conveying the container to a dosing station,
retaining the container within the dosing station whilst the dose is introduced into the container and thereafter conveying the container away from the dosing station
which station comprises:
a retaining means for the container,
a dosing head that is positioned above the retaining means and houses a dosing nozzle oriented downwardly towards the mouth of container,
an inlet line for the liquid component terminating in the nozzle, and
a fluid flow control valve mounted within the inlet line that is capable of being opened for a predetermined period of time;
opening the valve when the container is retained within the dosing station and expelling the dose of the liquid component through the nozzle in a stream; **characterised by** scanning a laser-generated beam of light across the stream at frequent interval;
calculating the width of the stream at each scan and therefrom generating a representative value of the volume of liquid component between successive scans and cumulating successive representative values to generate a cumulative value for the dose;
comparing the cumulative value with a predetermined range of dose values and if the cumulative value lies above or below the range of dose values, generating a signal to actuate the means for respectively decreasing or increasing the dose introduced into a subsequent container.

2. A process according to claim 1 **characterised in that** the means for altering the dose introduced into a subsequent container comprises a gas flow control valve, thereby restoring gas pressure within the storage vessel to a previously acceptable pressure.

3. A process according to claim 2 **characterised in that** the pressure in the storage vessel is kept within 3 mbar.

4. A process according to claim 2 or 3 **characterised in that** the storage vessel is maintained at a pressure selected in the range of from 2x10⁵ to 3.5 x 10⁵ Pa.

5. A process according to any preceding claim **characterised in that** the container is retained at the dosing station for a period of from 5 to 300 milliseconds.

6. A process according to any preceding claim **characterised in that** from 0.1 to 2 mls of liquid component is dosed into the container.

7. A process according to any preceding claim **characterised in that** the dosing nozzle at its tip is positioned from 7 to 20cm above the mouth of the container.

8. An apparatus for introducing a determined dose of a liquid component into a container having an open mouth comprising:-
conveyor means for conveying the container to a dosing station and conveyor means for conveying the container away from the dosing station after the dose has been introduced into the container.
the dosing station comprising
retaining means for retaining the container in the dosing station,
a dosing head positioned above the retaining means and housing a dosing nozzle oriented downwardly towards the mouth of container,
an inlet line for the liquid component which is connectable at one end to a storage vessel for the liquid component and terminating at a second end in the dose nozzle, and
a fluid flow control valve mounted within the inlet line, a control means for opening and closing the fluid flow control valve when the container is located on the dosing station,
a means to expel the dose of liquid through the dosing nozzle in the form of a stream, **characterized by**
a laser generator positioned at a height intermediate between the height of the retaining means and the height of the nozzle and oriented to scan a narrow beam of light at regular frequent intervals across the stream of liquid component to a detector, thereby measuring the width of the stream at each interval,
a controller adapted to receive an input from the detector which controller first calculates the width of the stream at each scan and thereby generates a representative value of the volume of liquid component in the stream in the interval between one scan and the next, secondly calculates a cumulative value of the total volume of the stream in the dose, thirdly compares the cumulative value with a predetermined range of dose values and if the cumulative value lies above or below the predetermined range, generates a signal to actuate the means for respectively decreasing or increasing the dose value introduced into a subsequent container.

## Patentansprüche

1. Verfahren zur Einführung einer Dosis einer flüssigen Komponente in einen Behälter mit einer offenen Mündung, umfassend die Schritte:
Befördern des Behälters zu einer Dosierstation,
Halten des Behälters innerhalb der Dosierstation, während die Dosis in den Behälter eingeführt wird, und anschließend Wegbefördern des Behälters von der Dosierstation,
wobei die Station umfasst:
ein Haltemittel für den Behälter,
einen Dosierkopf, der über dem Haltemittel angeordnet ist und in dem eine Dosierdüse untergebracht ist, die in Richtung der Mündung des Behälters nach unten orientiert ist,
eine Einlassleitung für die flüssige Komponente, die in der Düse endet, und
ein Fluiddurchfluss-Regelventil, das innerhalb der Einlassleitung montiert ist, und das für einen vorbestimmten Zeitraum geöffnet werden kann;
Öffnen des Ventils, wenn der Behälter innerhalb der Dosierstation gehalten wird, und Ausstoßen der Dosis der flüssigen Komponente durch die Düse in einem Strom; **gekennzeichnet durch**
Abrastern des Stroms mit einem **durch** einen Laser erzeugten Lichtstrahl in einem häufigen Intervall;
Berechnen der Breite des Stroms bei jeder Abrasterung und Erzeugen eines repräsentativen Werts des Volumens der flüssigen Komponente zwischen aufeinander folgenden Abrasterungen aus dieser und
Aufsummieren von aufeinander folgenden repräsentativen Werten, um einen Summenwert für die Dosis zu erzeugen;
Vergleichen des Summenwerts mit einem vorbestimmten Bereich von Dosiswerten und, wenn der Summenwert über oder unter dem Bereich von Dosiswerten liegt, Erzeugen eines Signals, um das Mittel zum Verringern bzw. Erhöhen der in einen nachfolgenden Behälter eingeführten Dosis zu betätigen.

2. Verfahren nach Anspruch 1, **dadurch gekennzeichnet, dass** das Mittel zum Ändern der in einen nachfolgenden Behälter eingeführten Dosis ein Gasdurchfluss-Regelventil umfasst, wodurch der Gasdruck innerhalb des Lagergefäßes auf einen vorher annehmbaren Druck wiederhergestellt wird.

3. Verfahren nach Anspruch 2, **dadurch gekennzeichnet, dass** der Druck im Lagergefäß innerhalb 3 mbar gehalten wird.

4. Verfahren nach Anspruch 2 oder 3, **dadurch gekennzeichnet, dass** das Lagergefäß auf einem Druck gehalten wird, der im Bereich von 2x10⁵ bis 3,5 x 10⁵ Pa ausgewählt ist.

5. Verfahren nach einem vorangehenden Anspruch, **dadurch gekennzeichnet, dass** der Behälter in der Dosierstation für einen Zeitraum von 5 bis 300 Millisekunden gehalten wird.

6. Verfahren nach einem vorangehenden Anspruch, **dadurch gekennzeichnet, dass** 0,1 bis 2 ml der flüssigen Komponente in den Behälter dosiert werden.

7. Verfahren nach einem vorangehenden Anspruch, **dadurch gekennzeichnet, dass** die Dosierdüse an ihrer Spitze 7 bis 20 cm über der Mündung des Behälters angeordnet wird.

8. Vorrichtung zur Einführung einer bestimmten Dosis einer flüssigen Komponente in einen Behälter mit einer offenen Mündung, umfassend:
ein Fördermittel zum Befördern des Behälters zu einer Dosierstation und ein Fördermittel zum Wegbefördern des Behälters von der Dosierstation, nachdem die Dosis in den Behälter eingeführt wurde,
wobei die Dosierstation umfasst
ein Haltemittel zum Halten des Behälters in der Dosierstation,
einen Dosierkopf, der über dem Haltemittel angeordnet ist und in dem eine Dosierdüse untergebracht ist, die in Richtung der Mündung des Behälters nach unten orientiert ist, eine Einlassleitung für die flüssige Komponente, die an einem Ende mit einem Lagergefäß für die flüssige Komponente verbunden werden kann und an einem zweiten Ende in der Dosierdüse endet, und
ein Fluiddurchfluss-Regelventil, das innerhalb der Einlassleitung montiert ist,
ein Steuermittel zum Öffnen und Schließen des Fluiddurchfluss-Regelventils, wenn sich der Behälter in der Dosierstation befindet,
ein Mittel zum Ausstoßen der Flüssigkeitsdosis durch die Dosierdüse in Form eines Stroms, **gekennzeichnet durch**
einen Lasergenerator, der in einer Höhe zwischen der Höhe des Haltemittels und der Höhe der Düse angeordnet ist und so orientiert ist, dass er mit einem schmalen Lichtstrahl in regelmäßigen häufigen Intervallen den Strom der flüssigen Komponente auf einen Detektor abrastert, wodurch die Breite des Stroms in jedem Intervall gemessen wird,
eine Steuereinheit, die dazu ausgelegt ist, ein Eingangssignal vom Detektor zu empfangen, wobei die Steuereinheit erstens die Breite des Stroms bei jeder Abrasterung berechnet und **dadurch** einen repräsentativen Wert des Volumens der flüssigen Komponente im Strom im Intervall zwischen einer Abrasterung und der nächsten erzeugt, zweitens einen Summenwert des gesamten Volumens des Stroms in der Dosis berechnet, drittens den Summenwert mit einem vorbestimmten Bereich von Dosiswerten vergleicht und, wenn der Summenwert über oder unter dem vorbestimmten Bereich liegt, ein Signal erzeugt, um das Mittel zum Verringern bzw. Erhöhen des in einen nachfolgenden Behälter eingeführten Dosiswerts zu betätigen.

## Revendications

1. Procédé pour introduire une dose d'un composant liquide dans un récipient comportant une ouverture, comprenant les étapes consistant à :
transporter le récipient vers un poste de dosage,
retenir le récipient dans le poste de dosage pendant que la dose est introduite dans le récipient puis transporter le récipient hors du poste de dosage
lequel poste de dosage comprend :
un moyen de retenue pour le récipient,
une tête de dosage qui est positionnée au-dessus du moyen de retenue et qui reçoit une buse de dosage orientée vers le bas en direction de l'ouverture du récipient,
une conduite d'entrée pour le composant liquide débouchant dans la buse, et
une soupape de réglage de débit de fluide montée dans la conduite d'entrée qui peut être ouverte pendant une période prédéterminée ;
ouvrir la soupape lorsque le récipient est retenu dans le poste de dosage et éjecter la dose de composant liquide à travers la buse sous forme d'un jet ; **caractérisé par**
le balayage d'un faisceau lumineux généré par laser en travers du jet à intervalles fréquents ;
le calcul de la largeur du jet à chaque balayage et, à partir de là, la formation d'une valeur représentative du volume de composant liquide entre des balayages successifs et la cumulation de valeurs représentatives successives pour former une valeur cumulée pour la dose;
la comparaison de la valeur cumulée avec une plage prédéterminée de valeurs de doses et, si la valeur cumulée est supérieure ou inférieure à la plage de valeurs de doses, la génération d'un signal pour actionner le moyen pour diminuer ou augmenter respectivement la dose introduite dans un récipient suivant.

2. Procédé selon la revendication 1, **caractérisé en ce que** le moyen pour modifier la dose introduite dans un récipient suivant comprend une soupape de réglage de débit de gaz, rétablissant ainsi une pression de gaz dans la cuve de stockage jusqu'à un niveau de pression précédemment acceptable.

3. Procédé selon la revendication 2, **caractérisé en ce que** la pression dans la cuve de stockage est maintenue à 3 mbars ou moins.

4. Procédé selon la revendication 2 ou 3, **caractérisé en ce que** la cuve de stockage est maintenue à une pression choisie dans la plage comprise entre 2 x 10⁵ et 3,5 x 10⁵ Pa.

5. Procédé selon l'une quelconque des revendications précédentes, **caractérisé en ce que** le récipient est retenu dans le poste de dosage pendant une période comprise entre 5 et 300 millisecondes.

6. Procédé selon l'une quelconque des revendications précédentes, **caractérisé en ce que** entre 0,1 et 2 ml de composant liquide sont dosés dans le récipient.

7. Procédé selon l'une quelconque des revendications précédentes, **caractérisé en ce que** la pointe de la buse de dosage est positionnée à entre 7 cm et 20 cm au-dessus de l'ouverture du récipient.

8. Appareil pour introduire une dose déterminée d'un composant liquide dans un récipient comportant une ouverture, comprenant :
un moyen de transport pour transporter le récipient vers un poste de dosage et un moyen de transport pour transporter le récipient hors du poste de dosage après que la dose a été introduite dans le récipient,
le poste de dosage comprenant
un moyen de retenue pour retenir le récipient dans le poste de dosage,
une tête de dosage positionnée au-dessus du moyen de retenue et recevant une buse de dosage orientée vers le bas en direction de l'ouverture du récipient,
une conduite d'entrée pour le composant liquide qui peut être raccordée à une extrémité à une cuve de stockage pour le composant liquide et qui, à une seconde extrémité, débouche dans la buse de dosage, et
une soupape de réglage de débit montée dans la conduite d'entrée,
un moyen de commande pour ouvrir et fermer la soupape de réglage de débit lorsque le récipient est placé dans le poste de dosage,
un moyen pour éjecter la dose de liquide à travers la buse de dosage sous forme d'un jet, **caractérisé par**
un générateur de laser positionné à une hauteur intermédiaire entre la hauteur du moyen de retenue et la hauteur de la buse et orienté pour balayer un étroit faisceau de lumière à intervalles fréquents réguliers en travers du jet de composant liquide vers un détecteur, mesurant ainsi la largeur du jet à chaque intervalle,
un dispositif de commande destiné à recevoir une entrée provenant du détecteur, lequel dispositif de commande, premièrement, calcule d'abord la largeur du jet à chaque balayage et génère ainsi une valeur représentative du volume de composant liquide dans le jet dans l'intervalle entre un balayage et le suivant, deuxièmement, calcule une valeur cumulée du volume total du jet dans la dose, troisièmement, compare la valeur cumulée avec une plage prédéterminée de valeurs de doses et, si la valeur cumulée est supérieure ou inférieure à la plage prédéterminée, génère un signal pour actionner le moyen pour diminuer ou augmenter respectivement la dose introduite dans un récipient suivant.
